# EUROPÄISCHE PATENTSCHRIFT

(11) **EP 4 100 152 B1**
(45) Veröffentlichungstag und Bekanntmachung des Hinweises auf die Patenterteilung: **10.01.2024**
(21) Anmeldenummer: 20816891.4
(22) Anmeldetag: 13.11.2020
(51) Int. Cl.: B01F 27/07, B01F 27/053, B01F 27/072, B01F 27/70, B01F 35/41, B01F 35/92, B01F 35/90

(54) **THERMOKINETISCHER MISCHER ZUM SCHMELZMISCHEN VON KUNSTSTOFFABFALLPRODUKTEN**
THERMOKINETIC MIXER FOR MELT-MIXING WASTE PLASTIC PRODUCTS
MÉLANGEUR THERMOCINÉTIQUE POUR MÉLANGER À L'ÉTAT FONDU DES DÉCHETS DE PLASTIQUE

(30) Priorität: 04.02.2020 DE 102020102819
(43) Veröffentlichungstag der Anmeldung: 14.12.2022
(73) Patentinhaber: Dann, Reimund, 48231 Warendorf (DE); Huwe, Alexander, 61118 Bad Vilbel (DE)
(72) Erfinder: Dann, Reimund, 48231 Warendorf (DE); Huwe, Alexander, 61118 Bad Vilbel (DE)
(74) Vertreter: Haarpatent Patentanwälte Krämer Meyer
(86) Internationale Anmeldenummer: PCT/DE2020/100970
(87) Internationale Veröffentlichungsnummer: WO 2021/155875

(56) Entgegenhaltungen:
- WO-A1-01/85322
- US-A- 1 555 964
- US-A- 4 478 515
- US-A- 5 626 421
- US-B1- 6 709 146

## Beschreibung

Die Erfindung betrifft einen thermokinetischen Mischer zum Schmelzmischen von Kunststoffabfallprodukten mit einem eine Mischkammer umschließenden Gehäuse, einer die Mischkammer durchragenden und mit einer Antriebseinheit verbindbaren Welle und mit von der Welle im Wesentlichen radial abstehenden Mischschaufeln.

Mischer zum Mischen unterschiedlicher Baustoffe, wie zum Beispiel Mörtel oder Beton sind hinreichend bekannt. Um der hohen Beanspruchung des Mischgehäuses standzuhalten, sind Mischer in der Regel aus Eisen oder Stahl gefertigt, das eine hohe Verschleißbeständigkeit zumindest an seiner Oberfläche besitzt, um dem von der Reibung an abrasiven Mischgut herrührenden Verschleißtendenzen möglichst lange standzuhalten. Ein Mischer dieser Bauart ist aus der EP 0 241 723 A2 bekannt.

Aus der EP 0 976 442 A2 ist eine Mischvorrichtung mit einer Mischtrommel und einer an den Enden der Mischtrommel gelagerten Mischwelle bekannt. Die Mischwelle weist radial nach außen abstehende Schaufelarme auf, an deren Enden Schaufelblätter angeordnet sind. Die Schaufelblätter weisen einen Verschleißschutz in Form einer Hartauftragsschweißung aus einem verschleißfesten Material auf.

US 3,591,146 A beschreibt eine Befestigungsvorrichtung für eine Misch- und Knetmaschine mit einer rotierenden Schneckenwelle, bestehend aus einem koaxial am Gehäuse der Misch- und Knetmaschine befestigbaren Gehäuse und einer separaten, unabhängig angetriebenen, drehbaren Welle mit darin radial angeordneten Schaufeln.

Aus US 5 895 790 A ist ein thermokinetischer Mischer bekannt, der zum Schmelzmischen verwendet wird. Hierbei werden Polymermischungen und thermogehärtetes Abfallmaterial zu nutzbaren Produkten zurückverwandelt durch erstes Formen eines thermogehärteten Materials von voraussagbare Qualität aus ungleichartigen Polymeren und nachfolgendes Schmelzmischen des thermogehärteten Materials mit einem thermoplastischen Material zu nutzbaren Produkten.

EP 1 365 853 B1 beschreibt einen gattungsgemäßen Mischer, bei dem auf einer Welle Anbauten befestigt sind und die Anbauten derart an der Welle angeordnet sind, dass die in dem Mischer befindlichen Partikel bei der Rotation der Welle auf mehrere Anbauten prallen.

Aus US 5 626 421 A ist ein Mischer bekannt, der einen zylindrischen Körper mit abnehmbaren, halbkreisförmigen, segmentierten Endkappenverschlüssen und einen Einlassschacht an einem ersten Ende und einen Auslassschacht an einem zweiten Ende umfasst. Eine mittig angeordnete hohle Mischwelle erstreckt sich durch die segmentierten Endkappen und ist mit diametral angeordneten hohlen Mischfingern versehen, die im Mischerkörper im Abstand zueinander angeordnet sind. Jeweils zwei Mischfinger sind über Flanschverbindungen miteinander verbunden. Weitere Mischervarianten sind in dem von der US 5 626 421 A genannten Stand der Technik erläutert.

Nachteilig bei den aus dem Stand der Technik bekannten Mischern ist, dass die Teile der Mischer, insbesondere die Mischschaufeln aufwendig miteinander und der antreibenden Welle verbunden sind und eine Demontage aufwendig und zeitintensiv ist.

Der Erfindung liegt die Aufgabe zugrunde, die Haltbarkeit eines Mischers und dessen Wartung zu verbessern.

Die Aufgabe wird durch die in Anspruch 1 angegebene Erfindung gelöst. Vorteilhafte Ausgestaltungen der Erfindung sind in den Unteransprüchen angegeben.

Die Aufgabe wird erfindungsgemäß dadurch gelöst, dass ein thermokinetischer Mischer zum Schmelzmischen von Kunststoffabfallprodukten bereitgestellt wird, mit einem eine Mischkammer umschließenden Gehäuse, einer die Mischkammer durchragenden und mit einer Antriebseinheit verbindbaren Welle und mit in der Mischkammer von der Welle radial abstehenden und Y-förmig gestalteten Mischschaufeln, deren freies, in die Mischkammer ragendes Ende quaderförmig ist und die an ihrem, dem freien Ende der Mischschaufeln entgegengesetzten Ende zwei Schenkel mit jeweils mindestens einer Durchgangsbohrung aufweisen, wobei in der Welle mehreckige Ausnehmungen vorliegen, in denen die Schenkel mittels die Durchgangsbohrungen durchragenden Befestigungsmitteln befestigbar sind. Die Welle ist vorteilhafterweise abschnittsweise mehreckig ausgestaltet, insbesondere in dem Bereich, der der Befestigung der Mischschaufeln dient, nämlich den Ausnehmungen. Die Ausnehmungen können insbesondere Flächen der mehreckigen Abschnitte darstellen, wobei die Schenkel mit ihren entsprechend gestalteten Kontaktflächen mit den mehreckigen Ausnehmungen in Kontakt bringbar sind. Durch die erfindungsgemäße Gestaltung der Mischschaufeln sind diese sicher, kraft- und drehmomentübertragend mit der Welle verbindbar, wobei nichtsdestotrotz eine einfache und schnelle Montage bzw. Demontage der Mischschaufeln möglich ist. Dies ist ein wesentlicher Vorteil der Erfindung. Denn gerade die Mischschaufeln müssen aufgrund der hohen Belastung regelmäßig ausgetauscht werden. Ein weiterer wesentlicher Vorteil ist deren quaderförmige Ausgestaltung, da bei einseitiger Abnutzung der Mischschaufeln, diese einfach demontiert und in entgegengesetzter Orientierung erneut montiert werden können.

Mithilfe des erfindungsgemäßen Mischers können Kunststoffabfallprodukte derart gemischt werden, dass diese anschmelzen und sich geleeartig verhalten, so dass aus den in den Mischer eingefüllten Kunststoffabfallprodukten eine Masse entsteht, die in nachfolgenden Bearbeitungsschritten zu neuen Produkten geformt werden kann. Der erfindungsgemäße Mischer bietet somit eine Form des Recyclings, bei der verschiedenartige Mischkunststoffe derart aufbereitet werden, dass aus ihnen neue Produkte hergestellt werden können. Die für das Anschmelzen der Kunststoffabfallprodukte notwendige Energie entsteht insbesondere dadurch, dass die Kunststoffabfallprodukte zum einen durch die Mischschaufeln geschert werden und zum anderen mit den Mischschaufeln, der Mischkammer und auch untereinander kollidieren, so dass kinetische Energie entsteht, die zur Erwärmung der Kunststoffabfallprodukte führt.

Das Y-förmig gestaltete Ende der Mischschaufeln weist zwei Schenkel mit jeweils mindestens einer Durchgangsbohrung für ein Befestigungsmittel auf. Die Mischschaufeln können somit in einfacher Weise in den Ausnehmungen der Welle befestigt werden. Die Welle ist in einer Ausgestaltung zumindest abschnittsweise rund ausgestaltet. Die mehreckigen Ausnehmungen der Welle können zum Beispiel in eine runde Welle gefräst sein, so dass in einer Ausgestaltung zwischen den mehreckigen Ausnehmungen runde Abschnitte vorliegen. Der Durchmesser der Welle kann über ihre Länge variieren, das heißt, die runden Abschnitte können wiederum einen anderen Durchmesser aufweisen, wie andere Bereiche der Welle, wie z. B. die Endbereiche.

Vorteilhafterweise weisen die Schenkel der Mischschaufeln eine zur Außenfläche der Ausnehmungen komplementär ausgestaltete Außenfläche, insbesondere Kontaktfläche auf, die mit der Außenfläche der Ausnehmungen in Kontakt bringbar ist. Insbesondere ist die Länge der Kontaktfläche der Schenkel derart gestaltet, dass sie der Länge der Außenfläche der Ausnehmung entsprechen, so dass die Schenkelenden im Wesentlichen bündig mit den Kanten der mehreckigen Ausnehmung abschließen. In den Flächen der mehreckigen Abschnitte, die die Ausnehmungen bilden, liegt insbesondere jeweils mindestens eine Bohrung zur Aufnahme eines die Mischschaufeln durchragenden Befestigungsmittels vor, so dass die Mischschaufeln in einfacher Weise in den Ausnehmungen befestigbar sind.

Alternativ können in den Ausnehmungen Mittel vorliegen, die beispielsweise Aufnahmen für die durchragenden Befestigungsmittel umfassen und auf die Welle und in die Ausnehmungen gesteckt oder anderweitig befestigt werden. Hierbei könnte es sich beispielsweise um einen geschlitzten Ring mit Bohrungen für die Befestigungsmittel handeln, der in die Ausnehmungen steckbar ist.

Die Anzahl der Mischschaufeln in der Mischkammer kann je nach Anwendung variiert werden.

In einer bevorzugten Ausgestaltung sind die Ausnehmungen in eine runde Welle gefräst. Es kann jedoch auch vorteilhaft sein, wenn eine insgesamt mehreckige Welle vorliegt, auf der beabstandet voneinander Bohrungen zur Befestigung der Mischschaufeln vorliegen. Um die Mischschaufeln zusätzlich axial zu sichern, kann es vorteilhaft sein, dass zwischen zwei Mischschaufeln mindestens eine auf die Welle aufsteckbare Abstandshülse vorliegt, deren Innenfläche rund, mehrkantig, insbesondere komplementär, das heißt bevorzugt passend oder kongruent zur Welle, bzw. deren Oberfläche ausgestaltet ist. Hierdurch wird die Abstandshülse verdrehsicher auf der Welle gehalten. Die Abstandshülse kann eine runde, ebene Oberfläche aufweisen und aus Kunststoff oder Metall bestehen. Insbesondere kann die Abstandshülse aus hartem Stahl, Hartguß, Hardox oder einer Kombination hieraus gefertigt sein. Je nach Bedarf kann die Anzahl der Abstandshülsen zwischen zwei Mischschaufeln variiert werden. Die Abstandshülsen können in Breite und Stärke variiert werden, so dass sie an die jeweilige Anwendung anpassbar sind. Es kann vorteilhaft sein, die Abstandshülsen mit einem Sicherungsring oder einer Klammer radial zu sichern.

In einer Ausgestaltung kann vorgesehen sein, dass die Mischschaufeln aus hartem Stahl, Hartguß, Hardox oder einer Kombination hieraus gefertigt sind. Es hat sich gezeigt, dass der Abrieb hierdurch erheblich vermindert wird und die Wartungsintervalle verlängert werden können.

Die freien Enden der Mischschaufeln sind quaderförmig ausgestaltet. Hierbei besitzen die Mischschaufeln eine große Grundfläche, die das Mischen fördert. Die quaderförmigen Mischschaufeln können schräge, gerade oder runde Ecken und Seitenflächen aufweisen.

Es ist bevorzugt, wenn die Mischschaufeln derart in der Mischkammer angeordnet sind, dass deren Grundflächen in einer zur Welle queraxial ausgerichteten Ebene liegen. Hierdurch liegen die Mischschaufeln insbesondere in Ebenen, die parallel zueinander sind. Es kann jedoch auch bevorzugt sein, wenn lediglich ein Teil der Mischschaufeln derart in der Mischkammer angeordnet sind, dass deren Grundflächen in einer zur Welle queraxial ausgerichteten Ebene liegen. Andere Mischschaufeln, bzw. ein weiterer Teil der in der Mischkammer enthaltenen Mischschaufeln können, bzw. kann in anderer Art in der Mischkammer angeordnet sein.

Um die Temperatur in der Mischkammer konstant zu halten, kann es vorteilhaft sein, dass in dem Gehäuse eine Kühlung vorliegt. Es hat sich als besonders vorteilhaft erwiesen, wenn die Kühlung in dem Gehäuse vorliegt, da hierdurch eine effektive Kühlung der Mischkammer erreicht, aber gleichzeitig auch eine zu starke Abkühlung des Mischguts verhindert wird. Als Kühlmittel kann ein Fluid, wie z. B. Wasser, Luft oder dergleichen benutzt werden und z. B. je nach Standort angepasst werden. Das zur Kühlung verwendete Fluid kann in einem Kreislauf zirkulieren, so dass die Wärme, die dem Mischraum entzogen wird, beispielsweise für einen anderen Prozess nutzbar ist.

Des Weiteren ist es vorteilhaft, wenn die die Mischkammer bildende und mit dem Mischgut in Kontakt bringbare Wand des Gehäuses aus einem Verschleißblech besteht, das insbesondere aus hartem Stahl, Hartguß, Hardox oder einer Kombination hieraus gefertigt ist. Das Gehäuse und insbesondere die die Mischkammer begrenzende Wand des Gehäuses besteht vorteilhafterweise aus drei Wänden, wobei die erste, mit dem Mischgut in Kontakt bringbare Wand aus einem Verschließblech besteht. Zwischen den der zweiten und dritten Wand kann vorteilhafterweise eine Kühlung angeordnet sein.

Die Mischschaufeln in der Mischkammer sind vorteilhafterweise hintereinander in Reihen angeordnet und die Grundflächen der Mischschaufeln sind parallel zueinander ausgerichtet. Hierdurch wird erreicht, dass sich die Kunststoffabfallprodukte zwischen den Grundflächen hin und her bewegen, wodurch sich deren kinetische Energie erhöht und der Schmelzprozess verbessert werden kann.

Die Mischkammer ist vorteilhafterweise zylinderförmig ausgestaltet und umfasst einen Mischtrog und einen an dem Mischtrog befestigbaren Mischkammerdeckel. Um die Achse des Mischtrogs dreht sich insbesondere die Welle. Der Mischtrog, insbesondere die Innenfläche des Mischtrogs kann eine Beschichtung aufweisen, die ein Anheften des Mischguts mindert. Hierbei kann es sich beispielsweise um eine Kunststoff- oder Metallbeschichtung handeln. Der Mischtrog an sich und auch der Mischkammerdeckel sind vorzugsweise aus Metall gefertigt. Der Mischkammerdeckel kann über Flanschverbindungen an dem Mischtrog befestigt sein. Um die Handhabung des Mischkammerdeckels zu vereinfachen, können Haken oder Griffe vorgesehen sein.

An der Unterseite des Mischtrogs ist vorzugsweise eine öffenbare Klappe vorgesehen, durch die Mischgut abführbar ist. Die Klappe kann händisch oder automatisch öffenbar sein.

Das Gehäuse des Mischers umfasst vorteilhafterweise mindestens drei insbesondere mit Öffnungen für die Welle versehenen und axial hintereinander angeordnete Seitenwände, die im Wesentlichen parallel zueinander ausgerichtet sind und die beispielsweise an einer im Wesentlichen senkrecht zu diesen ausgerichteten Gehäusegrundplatte befestigbar sind. Es wird somit ein kompaktes Gehäuse bereitgestellt, welches eine leicht zu transportierende Einheit bildet.

Die erste und zweite Seitenwand des Gehäuses bilden vorteilhafterweise Seitenwände der Mischkammer. Es kann somit auf zusätzliche Seitenwände der Mischkammer verzichtet werden. Der Mischtrog der Mischkammer kann beispielsweise mittels Befestigungsmittel lösbar oder mittels Schweißen permanent an der ersten und zweiten Seitenwand befestigt werden.

Um Mischgut der Mischkammer zuzuführen kann der Mischkammer eine beispielsweise zylindrische Zuführkammer vorgeschaltet sein. In der Zuführkammer sind insbesondere Fördermittel vorhanden, die Mischgut aus der Zuführkammer durch eine Öffnung der Seitenwand in die Mischkammer fördern. Das Fördermittel kann beispielsweise ein Schneckenförderer, ein Wendelförderer oder eine Exzenterschneckenpumpe sein. Je nach Anwendung können verschiedene Fördermittel zum Einsatz kommen. Im Gegensatz zum Schneckenförderer fehlt bei dem Wendelförderer eine Schneckenwelle in der Mitte, was den Vorteil hat, dass die Wartung und Montage des Wendelförderers einfach ist. In der Ausgestaltung des Fördermittels als Exzenterschneckenpumpe kann der Mischtrog als Stator ausgebildet sein, in dem sich ein im Prinzip als Rundgewinde-Schraube ausgebildeter Rotor bewegt. Ein Vorteil der Exzenterschneckenpumpe ist, dass sie sich in Verbindung mit entsprechender Mess- und Regeltechnik sehr gut zur Dosierung des Mischguts einsetzen lässt.

Um der Zuführkammer Mischgut zuzuführen, kann die Zuführkammer auf ihrer Oberseite eine Öffnung aufweisen. Die Öffnung kann trichterförmig gestaltet sein. Ein auf die Öffnung anbringbares Verschlussmittel, wie beispielsweise ein Deckel, verhindert das Eindringen von unerwünschtem Material in die Zuführkammer.

Es ist bevorzugt, die erste und die zweite oder die dritte Seitenwand jeweils ein Lager zur Lagerung der Welle aufweisen. Dadurch, dass der Abstand zwischen den Lagern gering ist, werden unerwünschte Schwingungen der Welle reduziert. Außerdem sind die Lager für Wartungsarbeiten gut zugänglich. Bei den Lagern kann es sich um bei dem Fachmann bekannte Wellenlager handeln, beispielsweise Wälzlager oder Gleitlager.

Die Erfindung wird nachfolgend anhand eines Ausführungsbeispiels der Erfindung näher erläutert, das in der Zeichnung dargestellt ist. Es zeigen
- Figur 1: eine perspektivische Ansicht einer bevorzugten Ausgestaltung eines Mischers,
- Figur 2: eine perspektivische Ansicht einer Welle,
- Figur 3: eine perspektivische Ansicht einer Welle mit Mischschaufeln,
- Figur 4: eine perspektivische Ansicht einer Mischschaufel und
- Figur 5: eine weitere perspektivische Ansicht einer Mischschaufel mit Befestigungsmittel.

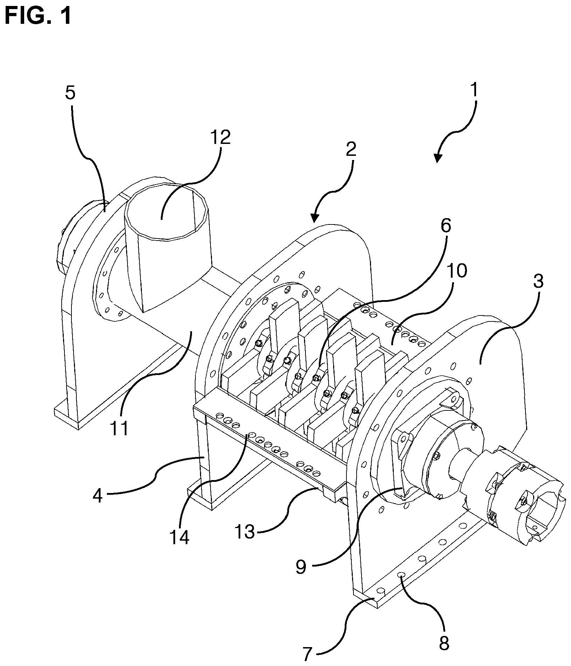

In Figur 1 ist eine perspektivische Ansicht einer bevorzugten Ausgestaltung eines Mischers gezeigt. Der Mischer 1 ist als thermokinetischer Mischer 1 ausgestaltet. Das Gehäuse 2 des Mischers 1 weist drei parallel zueinander ausgerichtete und hintereinander angeordnete Seitenwände 3, 4, 5 auf, die jeweils eine Öffnung für eine die Seitenwände 3, 4, 5 durchragende Welle 6 besitzen. Die Seitenwände 3, 4, 5 können in einfacher Weise auf einer nicht dargestellten Grundplatte befestigt werden. Zur Befestigung an der Grundplatte kann z. B. ein Flansch 7 mit Bohrungen 8 vorgesehen sein.

Die Welle 6 kann mit einer Antriebseinheit beispielsweise über eine Wellenkupplung wirkverbunden sein. Als Antrieb kann ein Getriebemotor in Fuß-, Flansch- oder Aufsteckbauform verwendet werden. Auch die Verwendung eines elektrohydraulischen Antriebes oder eines reinen Elektromotors ist möglich.

Die Welle 6 ist über in den Öffnungen der ersten Seitenwand 3 und dritten Seitenwand 5 eingepasste Lager 9 gesichert. Aufgrund der kurzen Bauweise und des geringen Lagerabstands können Schwingungen der Welle 6 minimiert werden und es wird eine hohe Biegesteifigkeit erreicht. Je nach Ausgestaltung können die Lager 9 auch in den Öffnungen der ersten Seitenwand 3 und zweiten Seitenwand 4 angeordnet sein, so dass sich der Lagerabstand nochmals verkürzt, was sich positiv auf die Biegesteifigkeit der Welle 6 auswirkt.

Die erste Seitenwand 3 und zweite Seitenwand 4 des Gehäuses 2 können gleichzeitig Seitenwände einer Mischkammer 10 formen.

Benachbart zur Mischkammer 10 ist eine zylindrisch gestaltete Zuführkammer 11 angeordnet, die von der zweiten und dritten Seitenwand 4, 5 eingefasst ist. Die Zuführkammer 11 weist auf der Oberseite eine schachtförmige Öffnung 12 auf, über die Mischgut in die Zuführkammer 11 eingebracht werden kann. Die Zuführkammer 11 kann horizontal angeordnet sein, wobei die Zuführkammer 11 auch geneigt sein kann. Die Zuführkammer 11 kann je nach Förderleistung unterschiedliche Baugrößen aufweisen und beispielsweise aus Edelstahl hergestellt sein. Zur Förderung des Mischguts von der Zuführkammer 11 in die Mischkammer 10 liegt in der Zuführkammer 11 ein nicht gezeigtes Fördermittel vor. Hierbei kann es sich beispielsweise um einen Schneckenförderer handeln, der ein mit der Welle 6 fest verbundenes Schneckengewinde aufweist. Das Schneckengewinde kann mit der Welle 6 verschweißt, mit ihr über Stege verbunden oder in einem Teil mit der Welle 6 hergestellt sein. Alternativ kann der Schneckenförderer auf einer Hülse befestigt sein, die wiederum auf die Welle 6 aufsteckbar ist. Die Hülse kann wiederum mittels Schrauben oder anderweitig mit der Welle 6 verbunden sein. Anstelle eines Schneckenförderers kann auch ein Wendelförderer ohne Welle genutzt werden. Bei dieser Ausgestaltung wären die Lager 9 der Welle 6 in der ersten Seitenwand 3 und der zweiten Seitenwand 4 zu integrieren. Das Schneckengewinde kann als Vollblattschnecke mit einem fortlaufenden Gewinde, als Bandgewinde oder Paddelschnecke ausgeführt sein.

Das Mischgut wird aus der Zuführkammer 11 durch die Öffnung in der zweiten Seitenwand 4 in die, der Zuführkammer 11 nachgeschalteten Mischkammer 10 gefördert. Für die Ausgestaltung, dass die Welle 6 durch in der ersten und zweiten Seitenwand 3, 4 vorliegende Lager gesichert ist, kann zum Beispiel die Zuführkammer 11 schräg angeordnet sein, so dass Mischgut durch die Schwerkraft in die Mischkammer 10 fällt. Alternativ kann ein Fördermittel vorgesehen sein, dass das Mischgut aus der Zuführkammer 11 durch eine Öffnung in der Seitenwand 4 in die Mischkammer 10 fördert, wie zum Beispiel ein Schieber.

Die Mischkammer 10 ist zylinderförmig ausgestaltet und umfasst einen Mischtrog 13 und einen nicht dargestellten Mischkammerdeckel, die über eine Flanschverbindung 14 miteinander befestigt werden. Die Mischkammer 10 kann auch einteilig ausgestaltet sein, wobei dann eine mit einem Verschlussmittel verschließbare Öffnung in der Oberseite der Mischkammer 10 vorgesehen sein kann, damit die Mischkammer 10 zugänglich ist. In dem Mischtrog 13 ist eine nicht dargestellte Öffnung integriert, die mit einem Verschlussmittel, zum Beispiel einem Deckel verschließbar ist. Das Öffnen und Schließen der Öffnung in dem Mischtrog 13 kann automatisch oder manuell erfolgen. Durch die Öffnung in dem Mischtrog 13 kann gemischtes Mischgut entfernt werden. In der Mischkammer 10 können Sensoren vorliegen, die beispielsweise die Temperatur des Mischguts bestimmen.

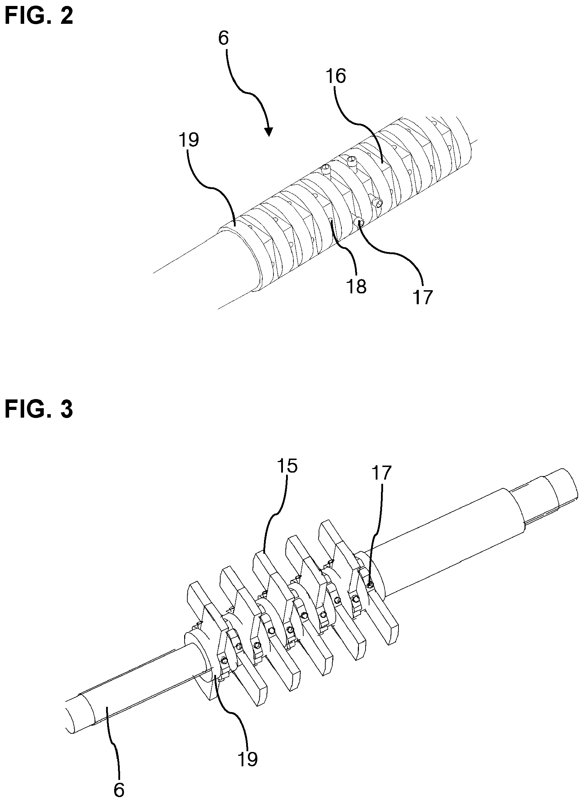

Die, die Mischkammer 10 durchragende Welle 6 dreht sich vorzugsweise um die Achse der Mischkammer 10. Wie in Figur 1 und außerdem in Figur 2 gezeigt, ist die Welle 6 abschnittsweise mehrkantig oder mehreckig ausgestaltet und kann unterschiedliche Wellendurchmesser aufweisen. Beispielsweise kann ein Wellenabschnitt in der Zuführkammer 11 einen größeren Wellendurchmesser aufweisen als ein Wellenabschnitt in der Mischkammer 10.

Wie in den Figuren 1 und 3 zu sehen, sind auf der Welle 6 Mischschaufeln 15 angeordnet, die sich von der die Mischkammer 10 durchragende Welle 6 radial erstrecken. Die Anzahl der Mischschaufeln 15 kann je nach Anwendung variiert werden. Die Mischschaufeln 15 können beispielsweise aus Hardox bestehen. Wie in Figur 2 dargestellt ist, weist die Welle 6 Ausnehmungen 16 auf, die mehreckig gestaltet sind, sprich in denen mehreckige Abschnitte vorliegen und die der Aufnahme der Mischschaufeln 15 dienen. Die Mischschaufeln 15 können mittels Befestigungsmittel 17 in den Bohrungen 18 befestigt werden. Die Ausnehmungen 16 können beispielsweise in eine runde Welle gefräst werden.

In der Ausgestaltung gemäß Figur 2 weist die Welle 6 viereckige Ausnehmungen 16 auf, zwischen denen ringförmige Abschnitte 19 vorliegen, die durch einen nicht bearbeiteten Bereich der Welle 6 entstehen können. Die Breite der ringförmigen Abschnitte 19 kann je nach Anwendung variiert werden und zum Beispiel der Breite der Ausnehmungen 16 entsprechen oder ein Vielfaches dieser betragen. Es kann auch vorgesehen sein, dass zwischen den Ausnehmungen 16 keine ringförmigen Abschnitte vorliegen. In den viereckigen Ausnehmungen 16 können zwei gegenüberliegend angeordnete Mischschaufeln 15 befestigt werden.

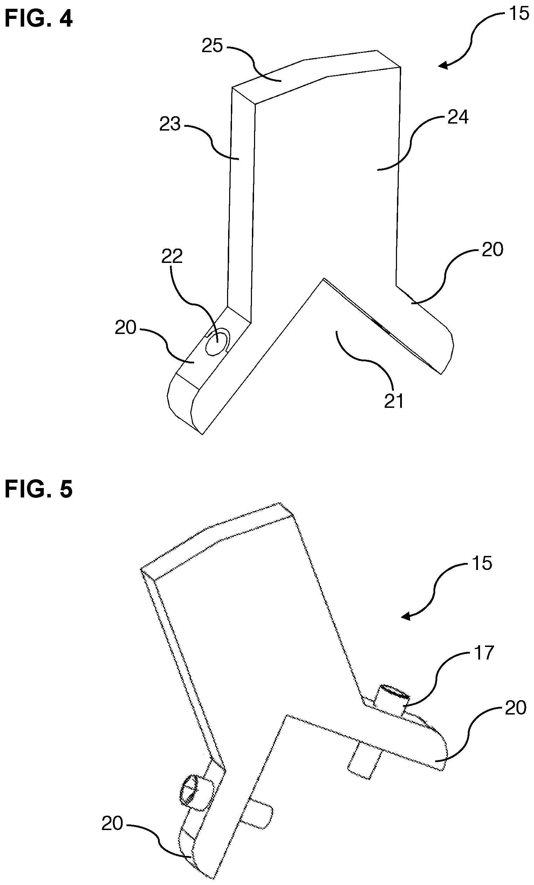

Die Mischschaufeln 15 sind - wie in Figur 4 und Figur 5 zu erkennen - Y-förmig gestaltet und weisen zwei Schenkel 20 auf, die beispielsweise in einem Winkel von 90° zueinanderstehen und hierdurch eine keilförmige Ausnehmung 21 formen.

Die keilförmige Ausnehmung 21 ist derart ausgestaltet, dass sie bündig in die Ausnehmung 16 der Welle 6 passt. Das heißt, die Breite und Länge der Schenkel 20 ist an die Breite und Länge der mehreckigen Ausnehmungen 16 angepasst. Eine viereckige Ausnehmung 16 umfasst insbesondere vier Flächen, die mit Kontaktflächen der Schenkel 20 in Kontakt bringbar sind. Zur Befestigung der Mischschaufeln 15 in den Ausnehmungen 16 können Befestigungsmittel 17 genutzt werden, die durch in den Schenkeln 20 vorliegende Durchgangsbohrungen 22 hindurch und mit den Bohrungen 18 in den Ausnehmungen 16 verschraubt werden, wie zum Beispiel in Figur 4 gezeigt ist. Die Durchgangsbohrungen 22 sind koaxial zu den Bohrungen 18 in den Ausnehmungen 16 gestaltet. Insbesondere können an einer viereckigen Ausnehmung 16 zwei Mischschaufeln 15 diametral befestigt werden, wobei die Befestigung derart erfolgt, dass die Schenkelenden der gegenüberliegend befestigten Mischschaufeln 15 keinen Druck aufeinander ausüben. Dies kann zum Beispiel dadurch erreicht werden, indem zwischen den Schenkelenden der gegenüberliegenden Mischschaufeln 15 noch ein Freiraum vorliegt.

Die Mischschaufeln 15 sind quaderförmig gestaltet und können gerade oder schräge Längsseiten 23 aufweisen. Es kann vorteilhaft sein, wenn die Mischkammer 10 eine Kombination von verschiedenen Mischschaufeln 15 umfasst, mit beispielsweise Mischschaufeln 15 mit schrägen und geraden Seitenflächen23. Außerdem können sie leicht spitz zulaufend gestaltet sein, das heißt, die am freien Ende einer Mischschaufel 15 vorliegende Schmalseite 25 ist leicht keilförmig gestaltet. Die Schmalseite kann aber auch gerade verlaufen.

Die Grundflächen 24 einer Mischschaufel 15 liegen bevorzugt in einer zur Längsachse der Welle 6 queraxial ausgerichteten Ebene. Außerdem liegen die Grundflächen 24 der in der Mischkammer 10 vorhandenen Mischschaufeln 15 parallel zueinander, so dass im Grunde die Grundfläche 24 einer Mischschaufel 15 der Grundfläche 24 der übernächsten Mischschaufel 15 gegenübersteht. Die in benachbarten Ausnehmungen 16 angeordneten Mischschaufeln 15 stehen vorteilhafterweise in einem Winkel von 90° versetzt zueinander. Hierdurch entstehen in der Mischkammer 10 beispielsweise vier Reihen von hintereinander angeordneten Mischschaufeln 15, wobei die Reihen in einem Winkel von 90° zueinanderstehen, wie in Figur 3 gezeigt. In dem dargestellten Ausführungsbeispiel stehen sich also die Mischschaufeln 15 von jeder dritten Ausnehmung 16 gegenüber.

Um zu verhindern, dass die sich drehenden Mischschaufeln 15 an den Seitenwänden 3, 4 reiben, kann jeweils an den in der Mischkammer 10 vorliegenden Wellenenden eine Abstandshülse angeordnet sein, die auf die Welle 6 geschoben wird.

Der Mischer 1 wird als thermokinetischer Mischer 1 genutzt. Es können im Wesentlichen jegliche Kunststoffabfallprodukte, umfassend beispielsweise Mischkunststoffe, Polymermischungen, thermoplastische Kunststoffe und thermogehärtete Abfallstoffe verwendet werden. Nach dem Schmelzmischen durch den Mischer 1 kann die Masse aus dem Mischer 1 abgeführt und in weiteren Schritten zu nutzbaren Produkten, wie z. B. Eisenbahnschwellen verarbeitet werden. Die Kunststoffteile werden durch die Öffnung 12 in die Zuführkammer 11 eingebracht. Die eingebrachten Kunststoffteile gelangen dann durch ein Fördermittel in die Mischkammer 10. Die Rotationsgeschwindigkeit der Welle 6 kann variieren von unterhalb von 1500 Umdrehungen pro Minute bis über 4000 Umdrehungen pro Minute. Die Wahl der Wellenrotationsgeschwindigkeit hängt von den verwendeten Kunststoffteilen und Prozessparametern ab.

Aufgrund der sich schnell drehenden Welle 6 und folglich der Mischschaufeln 15, erfolgt eine Durchmischung und Zerkleinerung der Kunststoffteile. Zum einen erfahren die Kunststoffteile durch die sich mit der Welle 6 schnell drehenden Mischschaufeln 15 eine Scherung. Zum anderen kommt es zu Kollisionen zwischen Kunststoffteilen und zwischen Kunststoffteilen und den Mischschaufeln 15 und zwischen Kunststoffteilen und der Innenwand der Mischkammer 10. Dies führt zur Erwärmung und zum Anschmelzen der Kunststoffteile, so dass eine Schmelzmischung der Kunststoffteile entsteht. Je nach eingebrachten Kunststoffteilen werden die Prozessparameter derart gewählt, dass nach einer definierten Prozesszeit oder bei Erreichen einer definierten Temperatur der Prozess gestoppt wird. Das schmelzgemischte Mischgut kann über eine an der Unterseite des Mischtrogs 13 angeordnete und als Auslassöffnung ausgestaltete Öffnung aus der Mischkammer 10 entfernt werden. Da das Mischgut in einem zähflüssigen Zustand ist, ist ein Abfließen des Mischguts über die Öffnung möglich. Das Entfernen des Mischguts aus der Mischkammer 10 kann in dem laufenden Betrieb, das heißt bei Drehung der Welle 6 durchgeführt werden, wobei es vorteilhaft ist, die Rotationsgeschwindigkeit zu reduzieren. Gleichzeitig kann neues Mischgut aus der Zuführkammer 11 mithilfe des Fördermittels der Mischkammer 10 zugeführt werden.

Wesentlicher Vorteil der Erfindung ist, dass zum Beispiel für die Wartung der Welle 6, bzw. der Mischschaufeln 15 der Gehäusedeckel entfernt und die Mischschaufeln 15 einfach durch Lösen der Befestigungsmittel 17 ausgetauscht werden können. Hierdurch ist der Austausch einzelner Mischschaufeln 15 in einfacher Weise möglich. Außerdem sind für die Y-förmigen Mischschaufeln 15 mit den Schenkeln 20 wenige Befestigungsmittel 17 zur Befestigung an der Welle 6 notwendig. Ferner sind die Mischschaufeln 15 auf Umschlag nutzbar, das heißt, ist beispielsweise eine Seite, insbesondere eine Grundfläche 24 einer Mischschaufel 15 beschädigt oder abgenutzt, kann die Mischschaufel 15 umgedreht und weiter genutzt werden.

## Patentansprüche

1. Thermokinetischer Mischer (1) zum Schmelzmischen von Kunststoffabfallprodukten mit einem eine Mischkammer (10) umschließenden Gehäuse (2), einer die Mischkammer (10) durchragenden und mit einer Antriebseinheit verbindbaren Welle (6) und mit in der Mischkammer (10) von der Welle (6) radial abstehenden und Y-förmig gestalteten Mischschaufeln (15), deren freies, in die Mischkammer (10) ragendes Ende quaderförmig ist und die an ihrem, dem freien Ende der Mischschaufeln (15) entgegengesetzten Ende zwei Schenkel mit jeweils mindestens einer Durchgangsbohrung (22) aufweisen, wobei in der Welle (6) mehreckige Ausnehmungen (16) vorliegen, in denen die Schenkel (20) mittels die Durchgangsbohrungen (22) durchragenden Befestigungsmitteln (17) befestigbar sind.

2. Thermokinetischer Mischer (1) nach Anspruch 1, **dadurch gekennzeichnet, dass** die Mischschaufeln (15) aus hartem Stahl, Hartguß, Hardox oder einer Kombination hieraus gefertigt sind.

3. Thermokinetischer Mischer (1) nach Anspruch 1 oder 2, **dadurch gekennzeichnet, dass** die Schenkel (20) der Mischschaufeln (15) eine keilförmige Ausnehmung (21) bilden.

4. Thermokinetischer Mischer (1) nach einem der vorhergehenden Ansprüche, **dadurch gekennzeichnet, dass** die Welle (6) zumindest abschnittsweise rund ausgestaltet ist.

5. Thermokinetischer Mischer (1) nach einem der vorhergehenden Ansprüche, **dadurch gekennzeichnet, dass** die Welle (6) zumindest abschnittsweise mehreckig gestaltet ist und die Ausnehmungen Flächen der mehreckigen Abschnitte umfassen.

6. Thermokinetischer Mischer (1) nach einem der vorhergehenden Ansprüche, **dadurch gekennzeichnet, dass** in den Flächen der mehreckigen Abschnitte jeweils mindestens eine Bohrung zur Aufnahme eines die Mischschaufeln (15) durchragenden Befestigungsmittels (17) vorliegt.

7. Thermokinetischer Mischer (1) nach einem der vorhergehenden Ansprüche, **dadurch gekennzeichnet, dass** in dem Gehäuse (2) eine Kühlung vorliegt.

8. Thermokinetischer Mischer (1) nach einem der vorhergehenden Ansprüche, **dadurch gekennzeichnet, dass** eine die Mischkammer (10) bildende und mit dem Mischgut in Kontakt bringbare Wand des Gehäuses (2) aus einem Verschleißblech besteht, das insbesondere aus hartem Stahl, Hartguß, Hardox oder einer Kombination hieraus gefertigt ist

9. Thermokinetischer Mischer (1) nach einem der vorhergehenden Ansprüche, **dadurch gekennzeichnet, dass** die Mischschaufeln (15) derart in der Mischkammer (10) angeordnet sind, dass deren Grundflächen (24) in einer zur Welle (6) queraxial ausgerichteten Ebene liegen.

10. Thermokinetischer Mischer (1) nach einem der vorhergehenden Ansprüche, **dadurch gekennzeichnet, dass** die Mischschaufeln (15) derart auf der Welle (6) angeordnet sind, dass benachbarte Mischschaufeln (15) in einem Versatz von 90° zueinander angeordnet sind.

11. Thermokinetischer Mischer (1) nach einem der vorhergehenden Ansprüche, **dadurch gekennzeichnet, dass** die Mischschaufeln (15) in der Mischkammer (10) hintereinander in Reihen angeordnet vorliegen und die Grundflächen (24) der Mischschaufeln (15) parallel zueinander ausgerichtet sind.

12. Thermokinetischer Mischer (1) nach einem der vorhergehenden Ansprüche, **dadurch gekennzeichnet, dass** die Mischkammer (10) zylinderförmig ist und einen Mischtrog (13) und einen an dem Mischtrog (13) befestigbaren Mischkammerdeckel umfasst.

13. Thermokinetischer Mischer (1) nach Anspruch 12, **dadurch gekennzeichnet, dass** der Mischtrog (13) eine öffenbare Klappe aufweist, durch die Mischgut abführbar ist.

14. Thermokinetischer Mischer (1) nach einem der vorhergehenden Ansprüche, **dadurch gekennzeichnet, dass** das Gehäuse (2) mindestens drei axial hintereinander angeordnete Seitenwände (3, 4, 5) umfasst, die im Wesentlichen parallel zueinander ausgerichtet sind und die an einer im Wesentlichen senkrecht zu diesen ausgerichteten Gehäusegrundplatte befestigbar sind.

15. Thermokinetischer Mischer (1) nach Anspruch 14, **dadurch gekennzeichnet, dass** die erste Seitenwand (3) und die zweite Seitenwand (4) Seitenwände der Mischkammer (10) bilden.

16. Thermokinetischer Mischer (1) nach einem der vorhergehenden Ansprüche, **dadurch gekennzeichnet, dass** der Mischkammer (10) eine Zuführkammer (11) vorgeschaltet ist.

17. Thermokinetischer Mischer (1) nach Anspruch 16, **dadurch gekennzeichnet, dass** die Zuführkammer (11) auf ihrer Oberseite eine Öffnung (12) zur Zuführung von Mischgut aufweist.

18. Thermokinetischer Mischer (1) nach einem der vorhergehenden Ansprüche 14-17, **dadurch gekennzeichnet, dass** die erste Seitenwand (3) und die zweite oder dritte Seitenwand (4, 5) jeweils ein Lager (9) zur Lagerung der Welle (6) aufweisen.

## Claims

1. Thermokinetic mixer (1) for melt mixing plastics waste, comprising a housing (2) enclosing a mixing chamber (10), a shaft (6) protruding through the mixing chamber (10) and connectable to a drive unit and Y-shaped mixing blades (15) protruding radially from the shaft (6) in the mixing chamber (10), wherein the free end of the mixing blades protruding into the mixing chamber (10) is cuboid, and the end opposite the free end of the mixing blades (15) has two legs in each case having at least one through bore (22), wherein polygonal recesses (16) are provided in the shaft (6), in which recesses the legs (20) can be fastened by means of fastening means (17) protruding through the through bores (22).

2. Thermokinetic mixer (1) according to claim 1, **characterised in that** the mixing blades (15) are made from hard steel, chilled cast iron, Hardox or a combination thereof.

3. Thermokinetic mixer (1) according to either claim 1 or claim 2, **characterised in that** the legs (20) of the mixing blades (15) form a wedge-shaped recess (21).

4. Thermokinetic mixer (1) according to any of the preceding claims, **characterised in that** the shaft (6) is designed so as to be round at least in portions.

5. Thermokinetic mixer (1) according to any of the preceding claims, **characterised in that** the shaft (6) is designed to be polygonal at least in portions and the recesses encompass surfaces of the polygonal portions.

6. Thermokinetic mixer (1) according to any of the preceding claims, **characterised in that**, in each of the surfaces of the polygonal portions, at least one bore is provided for receiving a fastening means (17) protruding through the mixing blades (15).

7. Thermokinetic mixer (1) according to any of the preceding claims, **characterised in that** cooling is provided in the housing (2).

8. Thermokinetic mixer (1) according to any of the preceding claims, **characterised in that** a wall of the housing (2), which wall forms the mixing chamber (10) and can be brought into contact with the mix material, consists of a wear plate made in particular from hard steel, chilled cast iron, Hardox or a combination thereof.

9. Thermokinetic mixer (1) according to any of the preceding claims, **characterised in that** the mixing blades (15) are arranged in the mixing chamber (10) in such a way that their base surfaces (24) lie in a plane aligned transversely to the shaft (6).

10. Thermokinetic mixer (1) according to any of the preceding claims, **characterised in that** the mixing blades (15) are arranged on the shaft (6) in such a way that adjacent mixing blades (15) are arranged so as to be offset by 90° from one another.

11. Thermokinetic mixer (1) according to any of the preceding claims, **characterised in that** the mixing blades (15) are provided in the mixing chamber (10) so as to be arranged one behind the other in rows and the base surfaces (24) of the mixing blades (15) are aligned parallel to one another.

12. Thermokinetic mixer (1) according to any of the preceding claims, **characterised in that** the mixing chamber (10) is cylindrical and comprises a mixing trough (13) and a mixing chamber cover which can be fastened to the mixing trough (13).

13. Thermokinetic mixer (1) according to claim 12, **characterised in that** the mixing trough (13) has an openable flap through which the mix material can be discharged.

14. Thermokinetic mixer (1) according to any of the preceding claims, **characterised in that** the housing (2) comprises at least three side walls (3, 4, 5) arranged axially one behind the other, which walls are aligned substantially parallel to one another and can be fastened to a housing base plate aligned substantially perpendicularly to said walls.

15. Thermokinetic mixer (1) according to claim 14, **characterised in that** the first side wall (3) and the second side wall (4) form side walls of the mixing chamber (10).

16. Thermokinetic mixer (1) according to any of the preceding claims, **characterised in that** a feed chamber (11) is connected upstream of the mixing chamber (10).

17. Thermokinetic mixer (1) according to claim 16, **characterised in that** the feed chamber (11) has an opening (12) on its upper side for feeding mix material.

18. Thermokinetic mixer (1) according to any of the preceding claims 14.17, **characterised in that** the first side wall (3) and the second or third side wall (4, 5) each have a bearing (9) for supporting the shaft (6).

## Revendications

1. Mélangeur thermocinétique (1) pour le mélange en fusion de déchets de matières plastiques, avec un carter (2) entourant une chambre de mélange (10), un arbre (6) traversant la chambre de mélange (10) et pouvant être relié à une unité d'entraînement, et avec des pales de mélange (15) saillant radialement de l'arbre (6) dans la chambre de mélange (10) et en forme de Y, dont l'extrémité libre saillant dans la chambre de mélange (10) est de forme parallélépipédique, et qui présentent à leur extrémité opposée à l'extrémité libre des pales de mélange (15) deux branches avec chacune au moins un alésage traversant (22), des évidements polygonaux (16) étant prévus dans l'arbre (6), dans lesquels les branches (20) peuvent être fixées à l'aide de moyens de fixation (17) traversant les alésages traversants (22).

2. Mélangeur thermocinétique (1) selon la revendication 1, **caractérisé en ce que** les pales de mélange (15) sont fabriquées en acier dur, en fonte dure, en Hardox ou en une combinaison de ces matériaux.

3. Mélangeur thermocinétique (1) selon la revendication 1 ou 2, **caractérisé en ce que** les branches (20) des pales de mélange (15) forment un évidement (21) en forme de coin.

4. Mélangeur thermocinétique (1) selon l'une des revendications précédentes,
**caractérisé en ce que** l'arbre (6) est au moins par sections rond.

5. Mélangeur thermocinétique (1) selon l'une des revendications précédentes,
**caractérisé en ce que** l'arbre (6) a au moins par sections une forme polygonale, et **en ce que** les évidements comprennent des surfaces des sections polygonales.

6. Mélangeur thermocinétique (1) selon l'une des revendications précédentes,
**caractérisé en ce que** les surfaces des sections polygonales comportent chacune au moins un alésage destiné à recevoir un moyen de fixation (17) traversant les pales de mélange (15).

7. Mélangeur thermocinétique (1) selon l'une des revendications précédentes,
**caractérisé en ce qu'**un refroidissement est prévu dans le carter (2).

8. Mélangeur thermocinétique (1) selon l'une des revendications précédentes,
**caractérisé en ce qu'**une paroi du carter (2) formant la chambre de mélange (10) et pouvant être mise en contact avec le produit à mélanger est constituée d'une tôle d'usure, qui est fabriquée en particulier en acier dur, en fonte dure, en Hardox ou en une combinaison de ces matériaux.

9. Mélangeur thermocinétique (1) selon l'une des revendications précédentes,
**caractérisé en ce que** les pales de mélange (15) sont disposées dans la chambre de mélange (10) de telle sorte que leurs surfaces de base (24) se trouvent dans un plan orienté transversalement à l'axe de l'arbre (6).

10. Mélangeur thermocinétique (1) selon l'une des revendications précédentes,
**caractérisé en ce que** les pales de mélange (15) sont disposées sur l'arbre (6) de telle sorte que des pales de mélange (15) voisines sont disposées avec un décalage de 90° entre elles.

11. Mélangeur thermocinétique (1) selon l'une des revendications précédentes,
**caractérisé en ce que** les pales de mélange (15) sont disposées en rangées les unes derrière les autres dans la chambre de mélange (10), et **en ce que** les surfaces de base (24) des pales de mélange (15) sont orientées parallèlement entre elles.

12. Mélangeur thermocinétique (1) selon l'une des revendications précédentes,
**caractérisé en ce que** la chambre de mélange (10) est de forme cylindrique et comprend un bac de mélange (13) et un couvercle de chambre de mélange pouvant être fixé sur le bac de mélange.

13. Mélangeur thermocinétique (1) selon la revendication 12, **caractérisé en ce que** le bac de mélange (13) présente un clapet ouvrable à travers lequel le produit à mélanger peut être évacué.

14. Mélangeur thermocinétique (1) selon l'une des revendications précédentes,
**caractérisé en ce que** le carter (2) comprend au moins trois parois latérales (3, 4, 5) disposées axialement les unes derrière les autres, qui sont orientées sensiblement parallèlement les unes aux autres, et qui peuvent être fixées à une plaque de base du carter orientée sensiblement perpendiculairement à celles-ci.

15. Mélangeur thermocinétique (1) selon la revendication 14, **caractérisé en ce que** la première paroi latérale (3) et la deuxième paroi latérale (4) forment des parois latérales de la chambre de mélange (10).

16. Mélangeur thermocinétique (1) selon l'une des revendications précédentes,
**caractérisé en ce qu'**une chambre d'alimentation (11) est placée en amont de la chambre de mélange (10).

17. Mélangeur thermocinétique (1) selon la revendication 16, **caractérisé en ce que** la chambre d'alimentation (11) présente sur sa face supérieure une ouverture (12) pour l'alimentation en produit à mélanger.

18. Mélangeur thermocinétique (1) selon l'une des revendications 14 à 17,
**caractérisé en ce que** la première paroi latérale (3) et la deuxième ou la troisième paroi latérale (4, 5) sont munies chacune d'un palier (9) pour loger l'arbre (6).
